# FASCICULE DE BREVET EUROPEEN

(11) **EP 3 003 822 B1**
(45) Date de publication et mention de la délivrance du brevet: **19.12.2018**
(21) Numéro de dépôt: 14725451.0
(22) Date de dépôt: 21.05.2014
(51) Int. Cl.: B62D 1/06, B62D 1/04, B60R 16/027

(54) **VOLANT DE VEHICULE**
FAHRZEUGLENKRAD
VEHICLE STEERING WHEEL

(30) Priorité: 27.05.2013 FR 1301204
(43) Date de publication de la demande: 13.04.2016
(73) Titulaire: Autoliv Development AB, 447 83 Vårgårda (SE)
(72) Inventeur: MOINARD, Fabrice, F-86170 Vouzailles (FR); SIMONET, Yann, F-86000 Poitiers (FR); BARIBAULT, Olivier, F-79390 Thenezay (FR)
(74) Mandataire: Vigand, Philippe
(86) Numéro de dépôt international: PCT/EP2014/060391
(87) Numéro de publication internationale: WO 2014/191266

(56) Documents cités:
- US-A1- 2012 006 148
- US-A1- 2013 055 849

## Description

La présente invention concerne de manière générale un volant destiné à être monté sur un véhicule automobile, et en particulier un volant proposant une fonction nécessitant un apport énergétique au niveau de la jante.

Il est connu dans l'art antérieur des volants de véhicules avec un consommateur d'énergie dans sa jante, tel que celui décrit par le document WO2010113551A1. De plus, le document US 2013/055849 A1 divulgue un volant de véhicule selon le préambule de la revendication 1. En contrepartie, ce système présente notamment l'inconvénient de nécessiter un positionnement dans une branche du volant du conducteur d'énergie (ici un conducteur électrique) qui alimente le consommateur d'énergie, pour garantir que le conducteur n'affleurera pas la surface du polymère ultérieurement injecté autour de la structure métallique. Ce positionnement, réalisé par la partie métallique entre le moyeu et la jante, augmente le coût de la partie métallique d'une part, et limite le nombre de conducteurs pouvant passer du moyeu vers la jante, pour des raisons d'encombrement.

Un but de la présente invention est de répondre aux inconvénients mentionnés ci-dessus et en particulier, tout d'abord, de proposer un volant ayant une structure métallique simple entre le moyeu et la jante, et qui permet toutefois d'augmenter les possibilités de passage de conducteurs d'énergie entre le moyeu et la jante sans compromettre la qualité d'aspect du volant.

Pour cela un premier aspect de l'invention concerne un volant de véhicule comprenant :
- un moyeu métallique,
- une jante,
- au moins une première branche comprenant une pièce de liaison mécanique solidarisant la jante au moyeu,
caractérisé en ce qu'il comprend au moins une autre branche, ou deuxième branche, en polymère injecté, exempte de pièce de liaison mécanique solidarisant la jante au moyeu, et contenant au moins un conducteur d'énergie, le volant comprenant des moyens de positionnement agencés pour positionner ledit au moins un conducteur d'énergie avant l'injection du polymère de ladite deuxième branche exempte de pièce de liaison mécanique, de sorte à garantir une distance minimale ou prédéterminée entre ledit au moins un conducteur d'énergie et une surface du polymère une fois injecté. Le volant selon la présente invention ne nécessite pas de structure interne complexe, puisque le conducteur d'énergie passe dans une branche exempte de liaison mécanique (la structure métallique). Cependant, le conducteur d'énergie ne peut pas affleurer ou se trouver en surface du polymère injecté car il est positionné dans la branche par les moyens de positionnement. En d'autres termes, le conducteur d'énergie, une fois le polymère injecté, se trouve à l'intérieur de la branche, noyé dans le polymère, sans affleurer ou sortir de la surface du surmoulage de polymère injecté, en particulier dans des zones visibles ou pouvant être touchées par le conducteur, et le concepteur n'est pas pour autant obligé d'ajouter une pièce de liaison mécanique dans cette branche. On comprend que les moyens de positionnement ne sont pas agencés pour transmettre entre le moyeu et la jante un couple de rotation qui correspond à un effort exercé par le conducteur pour diriger le véhicule, ou un effort entre la jante et le moyeu pendant un accident du véhicule. En d'autres termes, les moyens de positionnement ne sont liés au moyeu et/ou à la jante ni par une vis ni par une fixation par soudure par exemple.

Selon un mode de réalisation, ladite deuxième branche en polymère injecté est agencée entre le moyeu et la jante.

Selon un mode de réalisation le conducteur d'énergie alimente un moteur, un système de chauffage, un avertisseur visuel, ou une mesure et/ou une saisie d'information sur ou par le conducteur.

Selon un mode de réalisation, les moyens de positionnement comprennent une première portion d'accouplement agencée pour accoupler les moyens de positionnement au le moyeu, et les moyens de positionnement comprennent une deuxième portion d'accouplement agencée pour accoupler les moyens de positionnement à la jante, avant l'injection du polymère. Les moyens de positionnement, en étant accouplés sur le moyeu d'une part et la jante d'autre part, sont parfaitement positionnés par rapport à ces composants avant l'injection du polymère. On peut envisager de réaliser les accouplements par clipsage.

Selon un mode de réalisation, la jante est recouverte d'un premier moussage, et la deuxième portion d'accouplement est agencée pour accoupler les moyens de positionnement au premier moussage de la jante. Cette mise en oeuvre permet d'utiliser une jante métallique standard, et de réaliser l'accouplement sur un modèle précis, sans surcoût car le moussage est spécifique à chaque modèle de volant.

Selon un mode de réalisation, les moyens de positionnement comprennent un premier centreur et un deuxième centreur agencés pour coopérer avec un moule d'injection, pour localiser les moyens de positionnement par rapport au moule d'injection pendant l'injection du polymère injecté. La localisation par rapport au moule d'injection garantit un procédé précis, permet de compenser des dispersions des composants et d'éviter de concevoir la pièce suffisamment rigide pour ne pas se déformer lors de l'injection du polymère.

Selon un mode de réalisation, le premier centreur est agencé entre une première et une deuxième extrémité des moyens de positionnement, et il est agencé pour bloquer au moins trois degré de liberté en translation des moyens de positionnement par rapport au moule d'injection. Le premier centreur, agencé au milieu des moyens de positionnement, est bloqué en translation par rapport au moule d'injection, ce qui empêche les moyens de positionnement de se décaler en translation par rapport au moule d'injection.

Selon un mode de réalisation, le deuxième centreur est agencé entre le premier centreur et la première extrémité, et il est agencé pour bloquer au moins un degré de liberté en translation des moyens de positionnement par rapport au moule d'injection. Les moyens de positionnement sont bloqués en translation par le premier centreur, et le blocage selon une translation par le deuxième centreur permet d'améliorer la précision de la localisation.

Selon un mode de réalisation, les moyens de positionnement sont un support en matière plastique.

Selon un mode de réalisation, les moyens de positionnement sont une pièce d'épaisseur mince comprenant des encoches avec des ailettes agencées pour guider ledit au moins un conducteur d'énergie. Le conducteur d'énergie est positionné entre les ailettes et le reste des moyens de positionnement.

Selon un mode de réalisation, ledit au moins un conducteur d'énergie est un conducteur électrique.

Selon un mode de réalisation, ledit au moins un conducteur d'énergie est un conducteur de fluide caloporteur.

Un second aspect de l'invention est un véhicule automobile comportant au moins un volant selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de dessus d'un volant selon l'invention comprenant des moyens de positionnement dans une branche en polymère injecté ;
- la figure 2 représente une vue du volant au niveau des moyens de positionnement, avant injection du polymère ;
- la figure 3 représente une vue des moyens de positionnement.

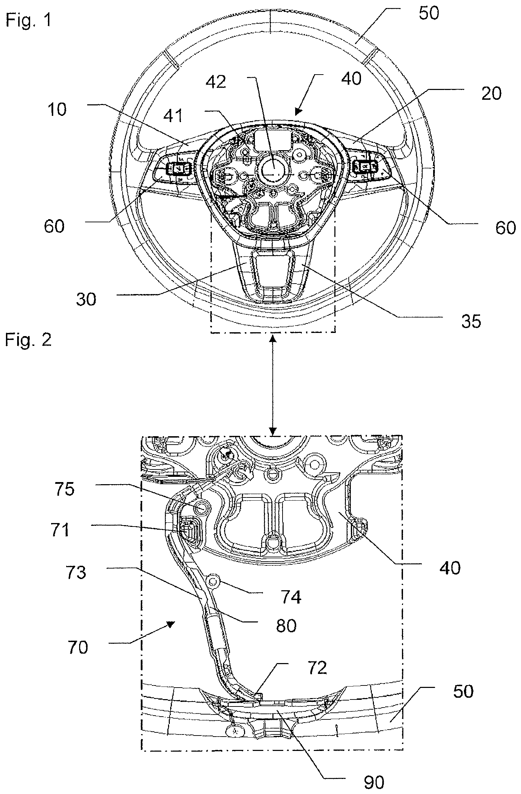

La figure 1 représente un volant de véhicule selon l'invention. Le volant comprend quatre branches 10, 20, 30, 35 reliant un moyeu 40 central à une jante 50 qui forme une partie de préhension pour un conducteur du véhicule.

Le moyeu 40 comprend une partie métallique 41 comprenant un alésage 42 pour assurer une interface de montage sur une colonne de direction non représentée.

La jante 50 comprend une âme métallique pour lui procurer une bonne résistance mécanique. Cette âme métallique est reliée au moyeu 40 par deux pièces de liaison mécanique qui sont de pièces métalliques noyées dans chacune des branches 10 et 20, ces branches pouvant être appelées les premières branches. Ainsi, la jante 50 est parfaitement solidaire du moyeu 40 et correctement localisée par rapport à ce dernier, de sorte qu'il n'est pas nécessaire que les branches 30 et 35, pouvant être appelées les deuxièmes branches, comprennent de pièce de liaison mécanique entre la jante 50 et le moyeu 40, car la rigidité est suffisante. Les pièces de liaison mécanique sont surmoulées lors d'une injection de polymère, pour former les branches 10 et 20. On peut envisager d'utiliser du polyuréthane en tant que polymère d'injection. Le polyurethane ici en question est alors ce qu'il est commun d'appeler une mousse de garnissage, ou polymère injecté de garnissage et sert à recouvrir l'armature du volant (les pièces de structure mécanique). En d'autres termes, le polymère injecté de garnissage est entre l'armature et la surface du volant (ou peut même former la surface externe). Les deuxièmes branches 30 et 35 sont par contre intégralement réalisées en polymère de garnissage et ne participent pas à la résistance mécanique du volant. On peut envisager également d'utiliser du polypropylène expansé pour servir de garnissage.

Chacune des branches 10 et 20 comprend en outre des boutons de commande 60 qui servent d'interface homme machine pour des appareils du véhicule, tels qu'un autoradio ou un système de géo localisation par exemple. Ces boutons de commande 60 sont reliés au réseau électrique du véhicule par des conducteurs électriques qui peuvent être tout ou partiellement noyés dans le polymère injecté formant les banches 10 et 20. A cet effet, les pièces de liaison mécanique reliant la jante 50 au moyeu 40 servent de support pour positionner ces conducteurs électriques, afin de garantir qu'ils n'affleureront pas la surface des branches 10 et 20, ce qui formerait un défaut d'aspect conduisant le volant au rebut. Les dimensions et le nombre de ces conducteurs électriques reliant les boutons de commande 60 au réseau électrique du véhicule font qu'il est difficile d'implanter des conducteurs d'énergie supplémentaires dans les branches 10 et 20.

Cependant, il peut être nécessaire d'ajouter des appareils ou équipements à alimenter en énergie dans la jante 50, ce qui impose de pouvoir implanter un conducteur d'énergie dans une des branches 10 ou 20. On peut envisager par exemple d'implanter un moteur vibrant ou un système de climatisation dans la jante 50, et il faudra alimenter ces équipements en électricité ou en fluide caloporteur pour réaliser la fonction désirée. On peut en particulier envisager d'implanter un avertisseur visuel, ou une mesure et/ou une saisie d'information sur ou par le conducteur du véhicule.

En tenant compte de la contrainte de localisation des conducteurs d'énergie dans les branches 10 ou 20 pour éviter des défauts d'aspect en raison de conducteurs d'énergie affleurant la surface du polymère injecté, il faudrait augmenter le volume des branches 10 et 20 pour pouvoir passer plus de conducteurs d'énergie, mais en raison des contraintes esthétiques, cette augmentation de volume n'est pas possible, et le nombre de conducteurs d'énergie est donc limité, car il faut pouvoir les localiser dans le polymère injecté et les pièces de liaison métalliques sont alors impératives.

L'invention propose de faire passer un tel conducteur supplémentaire dans une des branches 30 ou 35, sans pour autant rajouter de pièce de liaison mécanique entre la jante 50 et le moyeu 40. A cet effet, le conducteur d'énergie entre la jante 50 et le moyeu 40 est positionné dans cette branche 30 ou 35 exempte de pièce de liaison mécanique entre la jante 50 et le moyeu 40 par des moyens de positionnement, non visibles sur cette figure 1.

La figure 2 représente le volant de la figure 1 sans le polymère injecté, au niveau des moyens de positionnement qui seront noyés dans la branche 30 après injection du polymère. Les moyens de positionnement sont constitués d'un support 70 en matière plastique qui offre un positionnement du conducteur d'énergie 80 qui relie un vibrateur 90 au réseau électrique du véhicule. Ainsi, le conducteur d'énergie 80 est correctement positionné par rapport au moyeu 40 et à la jante 50, de sorte que pendant l'opération d'injection du polymère pour former la branche 30, le conducteur d'énergie 80 soit correctement noyé dans le polymère injecté, et situé à une distance prédéterminée de la surface de la branche 30, pour ne pas affleurer la surface ni provoquer un défaut d'aspect de la branche 30.

Le conducteur d'énergie 80 est positionné par le support 70 grâce à des ailettes 73 qui maintiennent le conducteur d'énergie 80 au contact du support 70, de sorte à garantir la position de l'ensemble.

Le support 70 est accouplé au moyeu 40 par une première portion 71 qui est un évidement destiné à coopérer avec une protubérance du moyeu 40. De plus, une deuxième portion 72 du support 70 permet de l'accoupler avec la jante 50. On peut envisager un clipsage de la deuxième portion 72 dans une cavité de la jante 50 par exemple. Le support 70 est alors solidarisé avec le moyeu 40 et la jante 50, pour permettre l'opération d'injection dans un moule d'injection.

Lors de l'opération d'injection dans le moule d'injection, le support 70, déjà accouplé au moyeu 40 et à la jante 50 est localisé par rapport au moule d'injection, pour garantir que le conducteur 80 soit correctement noyé dans le polymère injecté. A cet effet, le support 70 comprend un premier centreur 74 et un deuxième centreur 75. Le premier centreur 74 est agencé à une position centrale sur le support 70 et coopère avec le moule d'injection pour bloquer au moins trois degré de liberté en translation. Le deuxième centreur 75 est quant à lui agencé à proximité d'une extrémité supérieure du support 70 et coopère avec le moule d'injection pour bloquer au moins un degré de liberté en translation. De cette sorte, un positionnement correct du support 70 dans le moule d'injection est obtenu, tout en limitant les déformations support 70 qui pourraient engendrer des blocages de la pièce dans le moule.

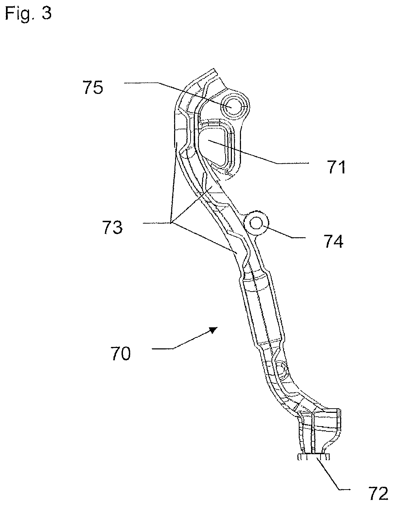

La figure 3 représente le support 70 seul. Il s'agit donc d'une pièce en matière plastique, avec une épaisseur mince, et qui présente une section transversale creuse ou concave, afin de pouvoir loger le conducteur d'énergie 80. Les ailettes 73 permettent de glisser aisément le conducteur d'énergie 80 entre elles-mêmes et le reste du corps du support 70. On peut envisager de réaliser le support 70 en polyamide par exemple.

L'invention permet donc d'offrir la possibilité de faire passer un conducteur d'énergie 80 dans une branche de volant 30 ou 35, sans nécessiter de pièce de liaison métallique faisant support entre le moyeu 40 et la jante 50, pour positionner le conducteur d'énergie 80, à moindre coût, tout en permettant de garantir une bonne qualité d'aspect.

On peut donc prévoir de proposer ou non une option de chauffage de la jante ou de mise en vibration du volant sans modifier l'ensemble métallique de base moyeu 40 - jante 50 et pièce de liaison mécanique dans les branches 10 et 20.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Volant de véhicule comprenant :
- un moyeu (40) métallique,
- une jante (50),
- au moins une première branche (10, 20) comprenant une pièce de liaison mécanique solidarisant la jante (50) au moyeu (40),
**caractérisé en ce qu'**il comprend au moins une deuxième branche (30, 35) en polymère injecté, exempte de pièce de liaison mécanique solidarisant la jante (50) au moyeu (40), et contenant au moins un conducteur d'énergie (80), le volant comprenant des moyens de positionnement agencés pour positionner ledit au moins un conducteur d'énergie (80) avant l'injection du polymère de ladite deuxième branche (30, 35) exempte de pièce de liaison mécanique, de sorte à garantir une distance prédéterminée entre ledit au moins un conducteur d'énergie (80) et une surface du polymère une fois injecté.

2. Volant selon la revendication précédente, **caractérisé en ce que** les moyens de positionnement comprennent une première portion d'accouplement (71) agencée pour accoupler les moyens de positionnement au moyeu (40), et **en ce que** les moyens de positionnement comprennent une deuxième portion d'accouplement (72) agencée pour accoupler les moyens de positionnement à la jante (50), avant l'injection du polymère.

3. Volant selon la revendication précédente, **caractérisé en ce que** la jante est recouverte d'un premier moussage, et **en ce que** la deuxième portion d'accouplement est agencée pour accoupler les moyens de positionnement au premier moussage de la jante (50).

4. Volant selon l'une des revendications précédentes, **caractérisé en ce que** les moyens de positionnement comprennent un premier centreur (74) et un deuxième centreur (75) agencés pour coopérer avec un moule d'injection, pour localiser les moyens de positionnement par rapport au moule d'injection pendant l'injection du polymère injecté.

5. Volant selon la revendication précédente, **caractérisé en ce que** le premier centreur (74) est agencé entre une première et une deuxième extrémité des moyens de positionnement, et **en ce qu'**il est agencé pour bloquer au moins trois degré de liberté en translation des moyens de positionnement par rapport au moule d'injection.

6. Volant selon la revendication précédente, **caractérisé en ce que** le deuxième centreur (75) est agencé entre le premier centreur et la première extrémité, et **en ce qu'**il est agencé pour bloquer au moins un degré de liberté en translation des moyens de positionnement par rapport au moule d'injection.

7. Volant selon l'une des revendications précédentes, **caractérisé en ce que** les moyens de positionnement sont un support (70) en matière plastique.

8. Volant selon l'une des revendications précédentes, **caractérisé en ce que** les moyens de positionnement sont une pièce d'épaisseur mince comprenant des encoches avec des ailettes (73) agencées pour guider ledit au moins un conducteur d'énergie (80).

9. Volant selon l'une des revendications précédentes, **caractérisé en ce que** ledit au moins un conducteur d'énergie (80) est un conducteur électrique.

10. Volant selon l'une des revendications précédentes, **caractérisé en ce que** ledit au moins un conducteur d'énergie (80) est un conducteur de fluide caloporteur.

11. Véhicule automobile comportant au moins un volant selon l'une des revendications précédentes.

## Patentansprüche

1. Fahrzeuglenkrad, umfassend:
- eine Nabe (40) aus Metall,
- einen Lenkradkranz (50),
- mindestens eine erste Speiche (10, 20) mit einem mechanischen Verbindungsstück, das den Lenkradkranz (50) mit der Nabe (40) fest verbindet,
**dadurch gekennzeichnet, dass** es mindestens eine zweite Speiche (30, 35) aus eingespritztem Polymer umfasst, die kein mechanisches Verbindungsstück aufweist, das den Lenkradkranz (50) mit der Nabe (40) fest verbindet, und mindestens einen Energieleiter (80) aufweist, wobei das Lenkrad Positionierungsmittel umfasst, die angeordnet sind, um den mindestens einen Energieleiter (80) vor dem Einspritzen des Polymers der zweiten Speiche (30, 35), die kein mechanisches Verbindungsstück aufweist, zu positionieren, um einen vorbestimmten Abstand zwischen dem mindestens einen Energieleiter (80) und einer Oberfläche des dann injizierten Polymers zu garantieren.

2. Lenkrad gemäß dem vorstehenden Anspruch, **dadurch gekennzeichnet, dass** die Positionierungsmittel einen ersten Kopplungsabschnitt (71) umfassen, der angeordnet ist, um die Positionierungsmittel mit der Nabe (40) zu koppeln, und dadurch, dass die Positionierungsmittel einen zweiten Kopplungsabschnitt (72) umfassen, der angeordnet ist, um die Positionierungsmittel vor dem Einspritzen des Polymers mit dem Lenkradkranz (50) zu koppeln.

3. Lenkrad gemäß dem vorstehenden Anspruch, **dadurch gekennzeichnet, dass** der Lenkradkranz mit einer ersten Schaumschicht bedeckt ist, und dass der zweite Kopplungsabschnitt angeordnet ist, um die Positionierungsmittel mit der ersten Schaumschicht des Lenkradkranzes (50) zu koppeln.

4. Lenkrad gemäß einem der vorstehenden Ansprüche, **dadurch gekennzeichnet, dass** die Positionierungsmittel einen ersten Zentrierer (74) und einen zweiten Zentrierer (75) umfassen, die so angeordnet sind, dass sie mit einer Spritzgussform zusammenwirken, um die Positionierungsmittel in Bezug auf die Spritzgussform während des Einspritzens des eingespritzten Polymers zu positionieren.

5. Lenkrad gemäß dem vorstehenden Anspruch, **dadurch gekennzeichnet, dass** der erste Zentrierer (74) zwischen einem ersten und einem zweiten Ende der Positionierungsmittel angeordnet ist, und dass er angeordnet ist, um mindestens drei Freiheitsgrade der Translation der Positionierungsmittel relativ zu der Spritzgussform zu blockieren.

6. Lenkrad gemäß dem vorstehenden Anspruch, **dadurch gekennzeichnet, dass** der zweite Zentrierer (75) zwischen dem ersten Zentrierer und dem ersten Ende angeordnet ist, und dass er angeordnet ist, um mindestens einen Freiheitsgrad der Translation der Positionierungsmittel relativ zu der Spritzgussform zu blockieren.

7. Lenkrad gemäß einem der vorstehenden Ansprüche, **dadurch gekennzeichnet, dass** es sich bei den Positionierungsmitteln um einen Träger (70) aus Kunststoff handelt.

8. Lenkrad gemäß einem der vorstehenden Ansprüche, **dadurch gekennzeichnet, dass** es sich bei den Positionierungsmitteln um ein Element mit geringer Dicke handelt, das Kerben mit Rippen (73) umfasst, die angeordnet sind, um den mindestens einen Energieleiter (80) zu führen.

9. Lenkrad gemäß einem der vorstehenden Ansprüche, **dadurch gekennzeichnet, dass** es sich bei dem mindestens einen Energieleiter (80) um einen elektrischen Leiter handelt.

10. Lenkrad gemäß einem der vorstehenden Ansprüche, **dadurch gekennzeichnet, dass** es sich bei dem mindestens einen Energieleiter (80) um einen Wärmeübertragungsleiter handelt.

11. Kraftfahrzeug umfassend mindestens ein Lenkrad gemäß einem der vorstehenden Ansprüche.

## Claims

1. A vehicle steering wheel comprising:
- a metallic hub (40),
- a rim (50),
- at least one first branch (10, 20) comprising a mechanical connection part locking the rim (50) to the hub (40),
**characterized in that** it comprises at least one second branch (30, 35) of injected polymer with no mechanical connection part locking the rim (50) to the hub (40) and containing at least one energy conductor (80), which steering wheel comprises positioning means arranged for positioning said at least one energy conductor (80) before the injection of the polymer of this second branch (30, 35) without a mechanical connection part so as to guarantee a predetermined distance between said at least one energy conductor (80) and a surface of the polymer once it is injected.

2. The steering wheel according to the previous claim, **characterized in that** the positioning means comprises a first coupling part (71) designed to couple the positioning means to the hub (40), and **in that** the positioning means comprises a second coupling part (72) designed to couple the positioning means to the hub (50) before the injection of the polymer.

3. The steering wheel according to the previous claim, **characterized in that** the rim is covered with a first foam and that the second coupling part is arranged to couple the positioning means to the first foam of the rim (50).

4. The steering wheel according to one of the previous claims, **characterized in that** the positioning means comprises a first centring device (74) and a second centring device (75) designed to cooperate with an injection mould in order to localize the positioning means relative to the injection mould during the injection of the injected polymer.

5. The steering wheel according to the previous claim, **characterized in that** the first centring device (74) is arranged between a first and a second end of the positioning means and that it is designed to block at least 3 degrees of freedom in translation of the positioning means relative to the injection mould.

6. The steering wheel according to the previous claim, **characterized in that** the second centring device (75) is arranged between the first centring device and the first end, and that it is arranged in order to block at least 1 degree of freedom in translation of the positioning means relative to the injection mould.

7. The steering wheel according to one of the previous claims, **characterized in that** the positioning means is a support (70) of plastic material.

8. The steering wheel according to one of the previous claims, **characterized in that** the positioning means is a thin piece comprising notches with fins (73) arranged for guiding this at least one energy conductor (80).

9. The steering wheel according to one of the previous claims, **characterized in that** said energy conductor (80) is an electrical conductor.

10. The steering wheel according to one of the previous claims, **characterized in that** said at least one energy conductor (80) is a conductor of heat-conveying fluid.

11. An automobile comprising at least one steering wheel according to one of the previous claims.
